# EUROPÄISCHE PATENTSCHRIFT

(11) **EP 4 001 052 B1**
(45) Veröffentlichungstag und Bekanntmachung des Hinweises auf die Patenterteilung: **19.07.2023**
(21) Anmeldenummer: 22152230.3
(22) Anmeldetag: 11.01.2019
(51) Int. Cl.: B62D 1/18, B66F 9/075

(54) **FLURFÖRDERZEUG**
INDUSTRIAL TRUCK
CHARIOT DE MANUTENTION

(30) Priorität: 24.01.2018 DE 102018101538
(43) Veröffentlichungstag der Anmeldung: 25.05.2022
(62) Teilanmeldung aus: 19151524.6
(73) Patentinhaber: Jungheinrich Aktiengesellschaft, 22047 Hamburg (DE)
(72) Erfinder: Heusinger, Sebastian, 22397 Hamburg (DE)
(74) Vertreter: Hauck Patentanwaltspartnerschaft mbB

(56) Entgegenhaltungen:
- EP-A2- 1 857 404
- US-A- 4 392 670
- US-A1- 2016 046 472

## Beschreibung

Die Erfindung bezieht sich auf ein Flurförderzeug nach Anspruch 1. Die Erfindung bezieht sich insbesondere auf ein Flurförderzeug mit einem Fahrantrieb und einer Lenkanordnung, dessen Lenkrad von einem Fahrerplatz aus betätigbar ist.

Es ist bekannt, aus ergonomischen Gründen das Lenkrad von Fahrzeugen mit der Lenksäule zu verstellen, und zwar sowohl in axialer Richtung der Lenksäule als auch in vertikaler Richtung. Eine zumeist von einem Hebel betätigte Verriegelungseinrichtung muss vor einer Verstellung des Lenkrads bzw. der Lenksäule gelöst und anschließend nach Verstellung wieder festgesetzt werden.

Es ist ferner bekannt, in einem Flurförderzeug ein Display zur Anzeige von Betriebssituationen vorzusehen, das in einer Art Armaturenbord oder Instrumententafel fest angeordnet ist. Nachteilig bei einer derartigen Anordnung ist, dass das Armaturenbord die Sicht für den Fahrer nach außen vor das Fahrzeug behindert. Außerdem ist das Display relativ weit vom Fahrer entfernt und bedarf daher einer gewissen Größe, damit Einzelheiten erkannt werden können. Die dem Display zugeordneten Bedienelemente sind bei einer fixen Position nicht für alle Fahrer ergonomisch erreichbar. Dokument US 2016/046472 A1 zeigt ein Flurförderzeug nach dem Oberbegriff des unabhängigen Anspruchs.

Der Erfindung liegt die Aufgabe zugrunde, ein Flurförderzeug zu schaffen, bei dem eine Bedieneinheit in ergonomischer Position und für den Fahrer gut erreichbar angeordnet ist.

Diese Aufgabe wird durch die Merkmale des Patentanspruchs 1 gelöst.

Bei der Erfindung ist eine Bedieneinheit, die ein Display und/oder ein Zugangsberechtigungsmodul aufweist, mit einem Lenksäulenabschnitt verbunden, der seinerseits mit dem Lenkrad verbunden ist. Die Bedieneinheit steht z.B. seitlich von dem Lenksäulenabschnitt ab, um nicht vom Lenkrad verdeckt zu werden.

Das Display kann insbesondere eine berührungsempfindliche Anzeige aufweisen oder eine Anzeige, der zusätzliche Bedienelemente wie z.B. Taster zugeordnet sind. Das Zugangsberechtigungsmodul ermöglicht eine Überprüfung der Zugangsberechtigung einer Bedienperson, nachgewiesen z.B. durch einen Schlüssel, einen Code oder eine Zugangsberechtigungskarte. Die Bedieneinheit mit Display und/oder Zugangsberechtigungsmodul ist dabei relativ nahe am Lenkrad und somit nahe am Fahrer angeordnet. Wird die Position des Lenkrades verändert, verändert sich automatisch die Position der Bedieneinheit. Die Bedieneinheit ist überdies platzsparend und optisch schwebend angeordnet. Eine derartige Anordnung stört die Sicht nach außen nicht und wirkt daher für den Bediener als eine Komfortverbesserung. Der Bediener wird durch Reduzierung von Kopfbewegungen, um Sicht außerhalb des Fahrzeugs zu erreichen, entlastet und einer Ermüdung wird so entgegengewirkt, was wiederum die Sicherheit erhöht.

Die Verstellbarkeit der Lenksäule ermöglicht eine Verstellung des Lenkrads relativ zu einem Fahrerplatz des Flurförderzeugs, der je nach Fahrzeugtyp insbesondere einen Fahrersitz oder einen Standplatz aufweisen kann. Der Fahrerplatz legt die Position des Fahrers im Betrieb des Flurförderzeugs weitgehend fest. Hierfür kann der Fahrerplatz eine Rückenlehne oder eine sonstige Fläche aufweisen, an der sich der Fahrer während der Fahrt abstützt, und/oder eine Einrichtung zur Erfassung der Anwesenheit des Fahrers ("Totmannknopf").

Nach einer Ausgestaltung der Erfindung weist die Bedieneinheit ein Ablagefach auf. Das Ablagefach kann separat an der Bedieneinheit angeordnet sein oder in Form eines Faches in dem Gehäuse für die Bedieneinheit integriert sein, wobei zum Beispiel die offene Seite des Faches von der Lenksäule abgewandt ist. Ferner kann alternativ oder zusätzlich an der Bedieneinheit ein Stifthalter angebracht sein oder eine Halterung für einen Handscanner. Stift und/oder Handscanner sind daher jederzeit vom Fahrer bequem erreichbar und verstellen sich ebenfalls bei der Einstellung des Lenkrades bzw. der Lenksäule mit.

Der mit dem Lenkrad verbundene Abschnitt der Lenksäule, der bekanntlich mit dem Lenkrad mitverstellt wird, ist bei der Erfindung aus in Längsrichtung getrennten Schalenteilen zusammengesetzt, wobei ein Haltebauteil für die Bedieneinheit mit einem Schalenteil verbunden ist. Diese Verbindung kann veränderbar gestaltet sein. Die Bedieneinheit kann lösbar an dem Lenksäulenabschnitt bzw. am Haltebauteil anbringbar sein. So ist zum Beispiel denkbar, ein Gehäuse für die Bedieneinheit auf das Haltebauteil, das die Form eines Rahmens aufweisen kann, aufzuschieben und in der aufgeschobenen Position lösbar zu verriegeln.

In einer Ausgestaltung weist das Zugangsberechtigungsmodul ein Schloss, ein Lesegerät und/oder eine Codeeingabeeinrichtung auf. Das Lesegerät kann beispielsweise zum Auslesen eines Magnetstreifens oder eines Chips einer Zugangsberechtigungskarte oder eines sonstigen Transponders ausgebildet sein.

Die Erfindung wird nachfolgend anhand von Zeichnungen näher erläutert.
- Fig. 1: zeigt perspektivisch die Seitenansicht einer Kabine für ein Flurförderzeug, zum Beispiel einen Schubmaststapler.
- Fig. 2: zeigt die gleiche Darstellung wie Fig. 1, jedoch mit einer geänderten Lenkradposition.
- Fig. 3: zeigt vergrößert das Lenkrad nach Figur 1 mit einer Bedieneinheit mit Display.
- Fig. 4: zeigt separat das Ende einer Lenksäule mit Lenkrad und der Bedieneinheit mit Display nach Figur 3.
- Fig. 5: zeigt eine ähnliche Darstellung wie Figur 3 bei entriegelter Lenksäule.
- Fig. 6: zeigt Schalenteile des mit dem Lenkrad verbundenen Lenksäulenabschnitts in offener Position mit einem Halterahmen für eine Bedieneinheit an einem Schalenteil.

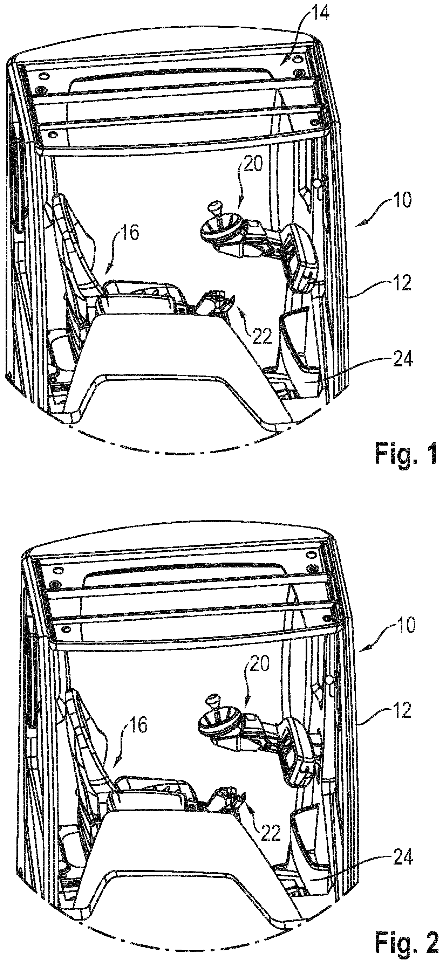

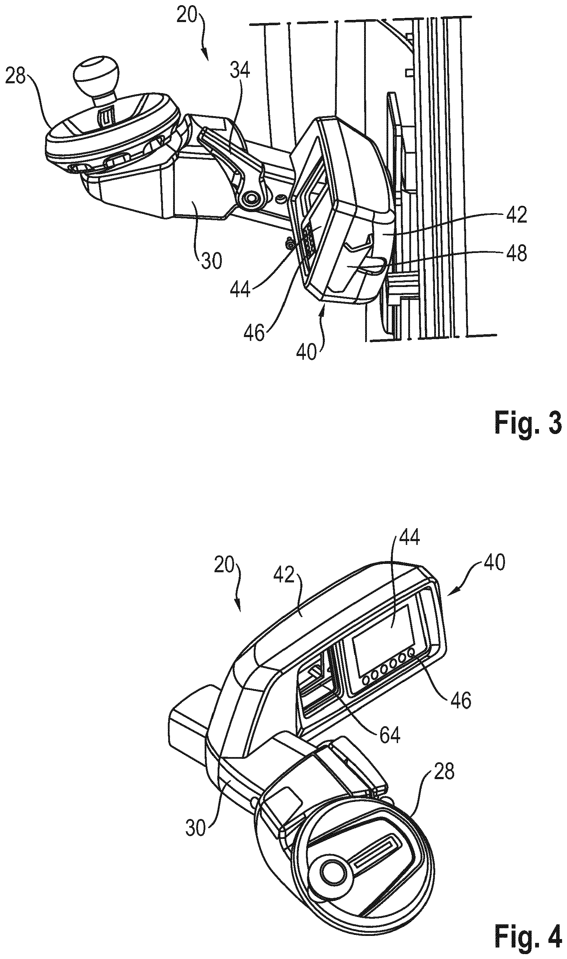

In den Figuren 1 und 2 ist eine Kabine 10 für einen Schubmaststapler angedeutet, bei dem vier im Rechteck angeordnete Säulen 12 ein Fahrerschutzdach 14 stützen. Der Fahrerplatz innerhalb der Kabine 10 ist durch einen Fahrersitz 16 vorgegeben. Dem Fahrerplatz zugeordnet ist eine Lenkanordnung 20, deren Einzelheiten detaillierter in den Figuren 3 bis 6 dargestellt sind. Rechts neben dem Fahrersitz 16 befindet sich eine Steuer- und Kontrolleinheit 22 bekannter Ausgestaltung zum Steuern und Kontrollieren der einzelnen Arbeitsvorgänge des im Übrigen nicht dargestellten Flurförderzeugs. Unterhalb der Lenkanordnung 20 befindet sich eine Ablage 24 für mitzuführende Gegenstände.

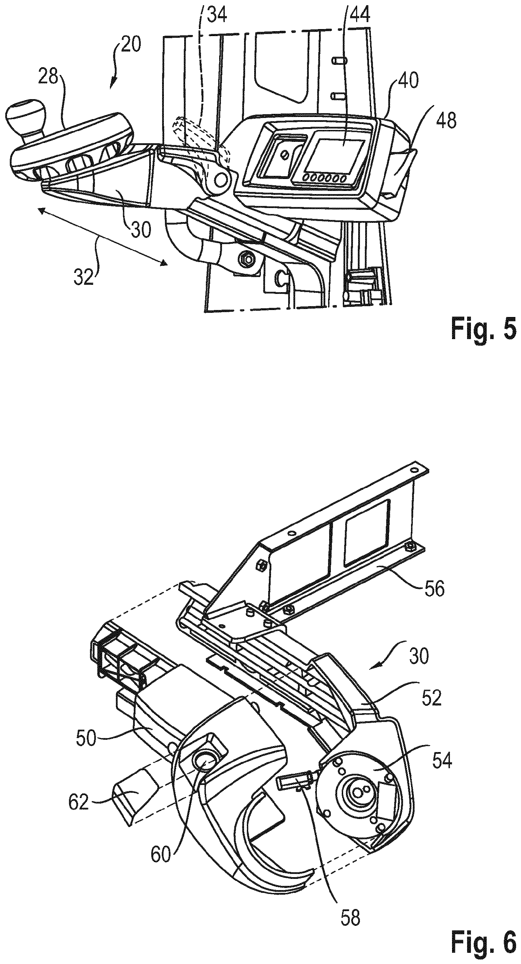

Die Lenkanordnung 20 weist ein Lenkrad 28 auf, das in einem Lager der Lenksäule gelagert ist, zur Lenkung von einem oder mehreren lenkbaren Rädern des Flurförderzeugs. Die Übertragung des Lenkausschlags auf die gelenkten Räder erfolgt über elektrische Signale, die einen Lenkantrieb steuern. Der Lenksäulenabschnitt 30 ist gegenüber einem fest mit dem Fahrzeugrahmen verbundenen weiteren Lenksäulenabschnitt in Längsrichtung zu diesem beweglich. Daher kann der Lenksäulenabschnitt 30 und damit das Lenkrad 28 in Richtung des in Figur 5 gezeigten Pfeils 32 verstellt werden. Weitere Verstellmöglichkeiten sind im gezeigten Ausführungsbeispiel nicht vorgesehen, aber ebenfalls denkbar, zum Beispiel senkrecht zur Längsachse der Lenksäule. Zur Verstellung muss ein Verriegelungshebel 34, der in Figur 3 in der verriegelten Stellung gezeigt ist, in die Entriegelungsstellung gebracht werden, wie in Figur 5 gezeigt. Nunmehr kann der Fahrer durch Ergreifen des Lenkrades die Position relativ zum Fahrersitz 16 verstellen. Es versteht sich, dass nicht nur eine Verstellung in Längsrichtung möglich ist, sondern ggf. auch kippend von oben nach unten bzw. unten nach oben. Die konstruktive Gestaltung einer Lenksäule in der beschriebenen Art und Weise ist an sich bekannt. In Fig. 2 ist das Lenkrad näher am Fahrersitz 16 als in Fig. 1.

Wie aus den Figuren 3 bis 5 erkennbar, ist eine Bedieneinheit 40 mit dem Lenksäulenabschnitt 30 verbunden. Die Bedieneinheit 40 weist ein Gehäuse 42 auf, das horizontal seitlich vom Lenksäulenabschnitt 30 absteht und ein Display 44 enthält, mit Bedienknöpfen 46. Außerdem enthält es auf der linken Seite vom Display 44 ein Zugangsberechtigungsmodul 64 zum Aktivieren des Fahrantriebs und/oder weiterer Funktionen des nicht gezeigten Flurförderzeugs. Das Zugangsberechtigungsmodul 64 kann ein Schloss, einen Startknopf, ein Lesegerät und/oder eine Codeeingabeeinrichtung enthalten.Ein Tausch der Positionen von Display 44 und Zugangsberechtigungsmodul 64 sind denkbar. Auf der von dem Lenksäulenabschnitt 30 abgewandten Seite des Gehäuses 42 ist ein Stifthalter 48 angebracht. Im Gehäuse 42 befindet sich die Elektronik für die Betätigungsknöpfe 46 und das Display 44 sowie das Schloss bzw. den Startknopf oder andere Zugangsberechtigung.

Die Funktionen, die mit der Bedien- und Displayeinheit 40 ausgeführt werden, sind an sich bekannt. Die Besonderheit im vorliegenden Fall liegt darin, dass die Bedieneinheit 40 fest mit dem verstellbaren Lenksäulenabschnitt 30 verbunden ist. Das bedeutet, dass die Position der Bedieneinheit 40 zum einen nahe am Fahrer liegt und zum anderen zusammen mit dem Lenkrad 28 ergonomisch einstellbar ist. Beide sind zueinander optimal positioniert, sodass das Verstellen der Einheit zu einer optimal ergonomischen Erreichbarkeit führt. Die Bedieneinheit 40 ist somit stets einfach vom Fahrer zu erreichen bzw. das Display 44 lässt sich stets einfach ablesen und/oder bedienen. Dies bedeutet eine reduzierte Belastung für den Fahrer und damit ein Entgegenwirken von Ermüdungserscheinungen, was der Sicherheit zugutekommt.

In Figur 6 ist zu erkennen, dass der Lenksäulenabschnitt 30 aus zwei in Längsrichtung geteilten Schalenabschnitten 50, 52 zusammengesetzt ist, die im zusammengebauten Zustand, wie in den Figuren 1 bis 5 dargestellt, miteinander verbunden werden, beispielsweise durch Verschraubung bzw. Klemmung. Der Schalenabschnitt 52 weist ein Lager 54 für die Lenksensorik bzw. das Lenkrad 28 auf. Mit dem Schalenabschnitt 52 ist ferner ein Rahmen 56 verbunden, der horizontal seitlich vom Schalenabschnitt 52 absteht. Er dient zur Anbringung des Gehäuses 42 der Bedieneinheit 40. So kann zum Beispiel das Gehäuse in geeigneter Weise auf den Rahmen 56 aufgeschoben und in der aufgeschobenen Position verschraubt sein.

Man erkennt in Figur 6 ferner einen Sensor 58 zur Ermittlung des Drehwinkels des Lenkrads.

## Patentansprüche

1. Flurförderzeug mit einem Fahrantrieb, einem Fahrerplatz und einer Lenkanordnung (20) mit einem Lenkrad (28) zur Verstellung mindestens eines gelenkten Rades des Fahrzeugs, wobei das Lenkrad (28) am Ende einer Lenksäule drehbar gelagert ist und die Lenksäule mit dem Lenkrad in Bezug auf den Fahrerplatz verstellbar ausgebildet ist, wobei eine Bedieneinheit (40), die ein Display (44) und/oder ein Zugangsberechtigungsmodul (64) aufweist, an dem mit dem Lenkrad (28) verbundenen Abschnitt (30) der Lenksäule befestigt ist und von dem Lenksäulenabschnitt (30) absteht, **dadurch gekennzeichnet, dass** der Lenksäulenabschnitt (30) aus in Längsrichtung getrennten Schalenteilen (50, 52) zusammengesetzt ist und ein Haltebauteil (56) für die Bedieneinheit (40) mit einem Schalenteil (52) verbunden ist.

2. Flurförderzeug nach Anspruch 1, **dadurch gekennzeichnet, dass** der Lenksäulenabschnitt (30) in axialer Richtung (32) der Lenksäule und/oder vertikal verstellbar ist.

3. Flurförderzeug nach Anspruch 1 oder 2, **dadurch gekennzeichnet, dass** die Bedieneinheit (40) ein Ablagefach aufweist.

4. Flurförderzeug nach Anspruch 3, **dadurch gekennzeichnet, dass** das Ablagefach an der von der Lenksäule abgewandten Seite der Bedieneinheit geöffnet ist.

5. Flurförderzeug nach einem der Ansprüche 1 bis 4, **dadurch gekennzeichnet, dass** an der Bedieneinheit (40) ein Stifthalter oder eine Kleinablage (48) angebracht ist.

6. Flurförderzeug nach Anspruch 5, **dadurch gekennzeichnet, dass** der Stifthalter oder die Kleinablage (48) an der von dem Lenksäulenabschnitt (30) abgewandten Seite der Bedieneinheit (40) angeordnet ist.

7. Flurförderzeug nach einem der Ansprüche 1 bis 6, **dadurch gekennzeichnet, dass** an der Bedieneinheit eine Halterung für einen Handscanner angebracht ist.

8. Flurförderzeug nach einem der Ansprüche 1 bis 7, **dadurch gekennzeichnet, dass** die Bedieneinheit (40) verstellbar an dem Lenksäulenabschnitt (30) angeordnet ist.

9. Flurförderzeug nach einem der Ansprüche 1 bis 8, **dadurch gekennzeichnet, dass** die Bedieneinheit (40) lösbar an dem Lenksäulenabschnitt (30) bzw. am Haltebauteil (56) anbringbar ist.

10. Flurförderzeug nach einem der Ansprüche 1 bis 9, **dadurch gekennzeichnet, dass** das Zugangsberechtigungsmodul (64) ein Schloss, ein Lesegerät und/oder eine Codeeingabeeinrichtung aufweist.

## Claims

1. An industrial truck comprising a drive system, a driver's position and a steering arrangement (20) comprising a steering wheel (28) for adjusting at least one steered wheel of the vehicle, wherein the steering wheel (28) is rotatably mounted on the end of a steering column and the steering column is configured to be adjustable with the steering wheel relative to the driver's position, wherein a control unit (40) which comprises a display (44) and/or an access authorisation module (64) is fastened to the portion (30) of the steering column which is connected to the steering wheel (28) and protrudes from the steering column portion (30), **characterized in that** the steering column portion (30) is made up of shell parts (50, 52) which are divided in the longitudinal direction and a holding component (56) for the control unit (40) is connected to a shell part (52).

2. The industrial truck according to claim 1, **characterized in that** the steering column portion (30) is adjustable in the axial direction (32) of the steering column and/or vertically.

3. The industrial truck according to claim 1 or 2, **characterized in that** the control unit (40) has a storage compartment.

4. The industrial truck according to claim 3, **characterized in that** the storage compartment is open on the side of the control unit remote from the steering column.

5. The industrial truck according to one of claims 1 to 4, **characterized in that** a pen holder or a small storage pocket (48) is attached to the control unit (40).

6. The industrial truck according to claim 5, **characterized in that** the pen holder or the small storage pocket (48) is arranged on the side of the control unit (40) remote from the steering column portion (30).

7. The industrial truck according to one of claims 1 to 6, **characterized in that** a holder for a hand-held scanner is attached to the control unit.

8. The industrial truck according to one of claims 1 to 7, **characterized in that** the control unit (40) is adjustably arranged on the steering column portion (30).

9. The industrial truck according to one of claims 1 to 8, **characterized in that** the control unit (40) may be releasably attached to the steering column portion (30) or, respectively, to the holding component (56).

10. The industrial truck according to one of claims 1 to 9, **characterized in that** the access authorisation module (64) has a lock, a reading device and/or a code input apparatus.

## Revendications

1. Chariot de manutention doté d'un dispositif d'entraînement, d'un poste de conduite et un ensemble de direction (20) comprenant un volant (28) pour le positionnement d'au moins une roue directrice du véhicule, dans lequel le volant (28) est monté de façon rotative à l'extrémité d'une colonne de direction et la colonne de direction est réalisée de façon à pouvoir être déplacée avec le volant par rapport au poste de conduite, dans lequel une unité de commande (40) présentant un affichage (44) et/ou un module d'autorisation d'accès (64) est fixée à la section (30) de la colonne de direction reliée au volant (28) et fait saillie à partir de la section de colonne de direction (30), **caractérisé en ce que** la section de colonne de direction (30) est constituée d'éléments de coquille (50, 52) séparés dans la direction longitudinale et un pièce de maintien (56) destinée à l'unité de commande (40) est reliée à un élément de coquille (52).

2. Chariot de manutention selon la revendication 1, **caractérisé en ce que** la section de colonne de direction (30) est déplaçable dans la direction axiale (32) de la colonne de direction et/ou verticalement.

3. Chariot de manutention selon la revendication 1 ou 2, **caractérisé en ce que** l'unité de commande (40) présente un casier de rangement.

4. Chariot de manutention selon la revendication 3, **caractérisé en ce que** le casier de rangement est ouvert sur le côté de l'unité de commande opposé à la colonne de direction.

5. Chariot de manutention selon l'une des revendications 1 à 4, **caractérisé en ce qu'**un porte-stylo ou un petit support de rangement (48) est fixé à l'unité de commande (40).

6. Chariot de manutention selon la revendication 5, **caractérisé en ce que** le porte-stylo ou le petit support de rangement (48) est disposé sur le côté de l'unité de commande (40) opposé à la section de colonne de direction (30).

7. Chariot de manutention selon l'une des revendications 1 à 6, **caractérisé en ce qu'**une monture pour un scanner portatif est fixée à l'unité de commande.

8. Chariot de manutention selon l'une des revendications 1 à 7, **caractérisé en ce que** l'unité de commande (40) est disposée de façon déplaçable dur la section de colonne de direction (30).

9. Chariot de manutention selon l'une des revendications 1 à 8, **caractérisé en ce que** l'unité de commande (40) peut être fixée de façon amovible à la section de colonne de direction (30) ou à la pièce de maintien (56).

10. Chariot de manutention selon l'une des revendications 1 à 9, **caractérisé en ce que** le module d'autorisation d'accès (64) présente une serrure, un dispositif de lecture et/ou un système de saisie de code.
